# EUROPEAN PATENT APPLICATION

(11) **EP 4 826 941 A1**
(43) Date of publication of application: **21.10.2026**
(21) Application number: 24931843.7
(22) Date of filing: 05.07.2024
(51) Int. Cl.: H02J 3/14, H02J 3/38, H02J 7/35, G06Q 50/06

(54) **METHOD AND APPARATUS FOR DETERMINING POWER CONSUMPTION MODE ON BASIS OF TIME**

(30) Priority: 29.03.2024 KR 20240043732
(71) Applicant: Hanwha Solutions Corporation, Jung-gu Seoul 04541 (KR)
(72) Inventor: KIM, Jae Hwi, Seoul 04541 (KR); PARK, Min Seok, Seoul 04541 (KR)
(74) Representative: Mooser, Sebastian Thomas
(86) International application number: PCT/KR2024/009558
(87) International publication number: WO 2025/206470

(57) **Abstract**

Provided are a method and apparatus for determining a power consumption mode on the basis of a time, wherein the method includes: determining any one mode from among a plurality of preset power modes as a power consumption mode on the basis of a time of consuming power; determining a supply path of power on the basis of the determined power consumption mode; and controlling power supply from a photovoltaic module, a battery, and a grid on the basis of the determined supply path.

## Description

### Technical Field

The present disclosure relates to a method and apparatus for determining a power consumption mode on the basis of a time, and more particularly, to a method and apparatus for determining any one mode from among a plurality of preset power modes as a power consumption mode on the basis of a time of consuming power and determining a supply path of power according to the determined mode.

### Background Art

Solar power generation is a power generation technology that may produce power while generating little pollution, through a process of collecting energy directly from the sun and converting the collected energy into electricity. Therefore, solar power generation is sustainable energy that is growing rapidly in the spotlight as eco-friendly power generation.

Meanwhile, most electrical energy production emits greenhouse gases and other air pollutants generated in a process of burning fossil fuels, which are major causes of climate change and air pollution. Therefore, consumption culture that efficiently uses electricity and consumption of electric energy through self-generation such as solar power generation may provide many benefits to the environment, economy, and society.

However, power produced by using solar photovoltaic systems has the characteristic of being highly variable on the basis of a power generation time, weather conditions, and the like. Accordingly, modes for supplying power to power consumption places through different paths on the basis of times of consuming power need to be set.

The foregoing background art is technical information that the inventor has possessed for derivation of the present disclosure or has acquired during the derivation process of the present disclosure, and may not be necessarily known art disclosed to the general public prior to the filing of the present disclosure.

### Detailed Description of Disclosure

### Technical Problem

The present disclosure provides a method and apparatus for determining a power consumption mode on the basis of a time. The problems to be solved by the present disclosure are not limited to the problems mentioned above, and other problems and advantages of the present disclosure that are not mentioned may be understood by the following description and more clearly understood by embodiments of the present disclosure. In addition, it will be appreciated that the problems and advantages to be solved by the present disclosure may be implemented by means and combinations thereof defined in claims.

### Technical Solution

As a technical means for achieving the above-described technical problem, according to a first aspect of the present disclosure, a method of determining a power consumption mode on the basis of a time includes: determining any one mode from among a plurality of preset power modes as a power consumption mode on the basis of a time of consuming power; determining a supply path of power on the basis of the determined power consumption mode; and controlling power supply from a photovoltaic module, a battery, and a grid on the basis of the determined supply path.

According to a second aspect of the present disclosure, an apparatus for determining a power consumption mode on the basis of a time includes: a memory storing at least one program; and a processor configured to perform a calculation by executing the at least one program, wherein the processor is further configured to determine any one mode from among a plurality of preset power modes as a power consumption mode on the basis of a time of consuming power, determine a supply path of power on the basis of the determined power consumption mode, and control power supply from a photovoltaic module, a battery, and a grid on the basis of the predetermined supply path.

A third aspect of the present disclosure may provide a computer-readable recording medium having recorded thereon a program for causing a computer to execute the method according to the first aspect.

In addition, another method for implementing the present disclosure, another system, and a computer-readable recording medium having stored therein a program for executing the method may be further provided.

Other aspects, features and advantages other than those described above will become apparent from the following drawings, claims and detailed description of the disclosure.

### Advantageous Effects of Disclosure

According to the problem-solving means of the present disclosure described above, in the present disclosure, a user may efficiently consume power by determining an appropriate power consumption mode on the basis of a consumption time of power.

Also, in the present disclosure, the user may reduce a cost consumed in use of power by determining the power consumption mode on the basis of a price of power supplied from a grid to a load.

In addition, in the present disclosure, an efficient supply path may be determined by determining a power supply path according to the power consumption mode on the basis of a power consumption pattern of the load.

### Brief Description of Drawings

FIG. 1 is a conceptual view illustrating a method of determining a power consumption mode, according to an embodiment.
FIG. 2 is a block diagram of a user terminal according to an embodiment.
FIG. 3 is an example diagram of a system including a user terminal and an external apparatus, according to an embodiment.
FIG. 4 is a flowchart illustrating a method of determining a power consumption mode on the basis of a consumption time of power, according to an embodiment.
FIG. 5 is an example view illustrating an interface that displays a currently determined power consumption mode, according to an embodiment.
FIG. 6 is an example view illustrating an interface that displays amounts of power produced, supplied, and consumed by a solar photovoltaic system, according to an embodiment.
FIG. 7 is an example view illustrating an interface that displays a supply path of power, according to an embodiment.

### Best Mode

The present disclosure relates to a method and apparatus for determining a power consumption mode on the basis of a time. According to an embodiment of the present disclosure, a method of determining a power consumption mode on the basis of a time includes: determining any one mode from among a plurality of preset power modes as a power consumption mode on the basis of a time of consuming power; determining a supply path of power on the basis of the determined power consumption mode; and controlling power supply from a photovoltaic module, a battery, and a grid on the basis of the determined supply path.

### Mode for Invention

Advantages and features of the present disclosure, and methods of achieving the same will become apparent with reference to embodiments described in detail in conjunction with the accompanying drawings. However, it should be understood that the present disclosure is not limited to embodiments presented below, but may be implemented in various different forms, and includes all modifications, equivalents, and alternatives included in the spirit and scope of the present disclosure. The embodiments presented below are provided to ensure that the present disclosure is complete and to fully inform those skilled in the art of the scope of the present disclosure. When describing the present disclosure, the detailed description of related known arts, which may obscure the subject matter of the present disclosure, will be omitted.

Terms used herein are only used to describe particular embodiments, and are not intended to limit the present disclosure. As used herein, the singular forms are intended to include the plural forms as well, unless the context clearly indicates otherwise. It will be further understood that the terms "comprises," "comprising," "have," and/or "having," when used herein, specify the presence of stated features, integers, steps, operations, elements, and/or components, but do not preclude the presence or addition of one or more other features, integers, steps, operations, elements, components, and/or groups thereof.

Some embodiments of the present disclosure may be represented by functional block components and various processing operations. Some or all of these functional blocks may be implemented as various numbers of hardware and/or software components that execute particular functions. For example, the functional blocks of the present disclosure may be implemented by one or more microprocessors or implemented by circuit components for certain functions. In addition, for example, the functional blocks of the present disclosure may be implemented in various programming or scripting languages. The functional blocks may be implemented as algorithms executed on one or more processors. In addition, the present disclosure may employ conventional technology for electronic environment setup, signal processing, and/or data processing. Terms such as "mechanism", "element", "means", and "component" may be broadly used and are not limited to mechanical and physical components.

In addition, the connection lines or connection members between the components shown in the drawings merely illustrate examples of functional connections and/or physical or circuit connections. In an actual apparatus, connections between components may be represented by various replaceable or additional functional connections, physical connections, or circuit connections.

Hereinafter, the present disclosure is described in detail with reference to the attached drawings.

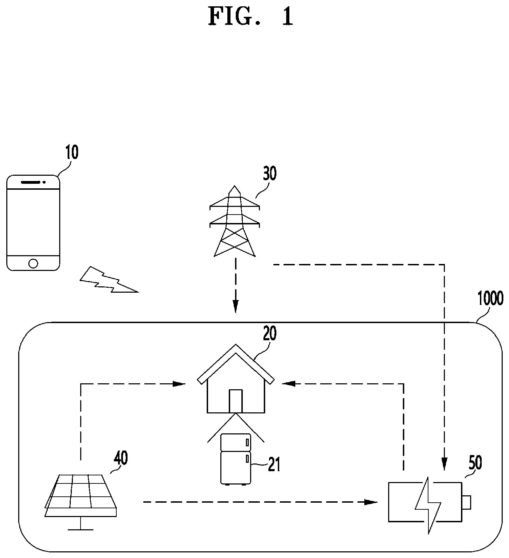

FIG. 1 is a conceptual view illustrating a method of determining a power consumption mode, according to an embodiment.

Referring to FIG. 1, a user terminal 10 may include a smartphone, a smart pad, and/or a tablet PC. The user terminal 10 may include a personal computer such as a desktop and a laptop. The user terminal 10 may include smart accessories such as a smartwatch and/or a head-mounted device (HMD), but is not limited thereto.

The user terminal 10 may control a solar photovoltaic system 1000. For example, the solar photovoltaic system 1000 may include at least one photovoltaic (PV) module 40, a battery 50, and a power consumption place 20, but is not limited thereto. The photovoltaic module 40 refers to an apparatus that produces power through sunlight. In addition, the battery 50 refers to an apparatus that stores power produced by at least one of the photovoltaic module 40 and a grid 30 and supplies the stored power to at least one of a load 21 and the grid 30. Also, the power consumption place 20 refers to a place including an object consuming power. In addition, the load 21 refers to an object that substantially consumes power at a power consumption place.

The solar photovoltaic system 1000 may be supplied with power from the grid 30. The grid 30 refers to an infrastructure that is supplied with power produced by solar power generation or supplies power to the power consumption place 20 in the case where power produced by solar power generation is insufficient.

The user terminal 10 may control a supply path of power supplied and an amount of power supplied to at least one load 21 of the power consumption place 20. Also, the user terminal 10 may control a supply path of power supplied and amount of power supplied to the battery 50 that stores power.

The user terminal 10 may determine, on the basis of a consumption time of power, any one mode from among a plurality of preset power modes as a power consumption mode. For example, the user terminal 10 may determine the power consumption mode on the basis of a price of unit power supplied from the grid 30 to the load 21 at a power consumption time.

The price of power supplied from the grid 30 to the load 21 may vary according to a consumption time of power. For example, during the daytime when an amount of power demanded to be supplied from the grid 30 is relatively large, a price of unit power may be lower during the nighttime when an amount of power demanded therefrom is relatively low. Accordingly, the user terminal 10 may determine the power consumption mode according to whether to supply power from the battery 50 to the load 21 or supply power from the grid 30 to the load 21 on the basis of a price of unit power at a consumption time of power.

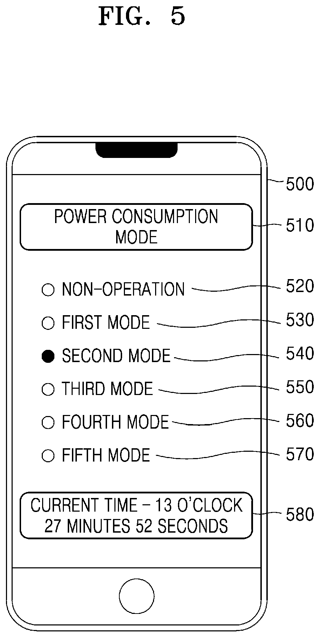

Hereinafter, a power consumption mode is described in detail with reference to FIG. 5.

In addition, the user terminal 10 may determine a supply path of power on the basis of a determined power consumption mode. Also, the user terminal 10 may control power supply from the photovoltaic module 40, the battery 50, and the grid 30 on the basis of the determined supply path.

For example, the supply path of power may include a first path for supplying power from the photovoltaic module 40 to the battery 50, a second path for supplying power from the photovoltaic module 40 to the load 21, a third path for supplying power from the battery 50 to the load 21, a fourth path for supplying power from the grid 30 to the load 21, a fifth path for supplying power from the grid 30 to the battery 50, a sixth path for supplying power from the photovoltaic module 40 to the grid 30, and a seventh path for supplying power from the battery 50 to the grid 30, but is not limited thereto.

For example, the user terminal 10 may determine an amount of power supplied from the photovoltaic module 40 to the load 21, an amount of power supplied from the battery 50 to the load 21, and an amount of power supplied from the grid 30 to the load 21, according to the determined power consumption mode. In addition, the user terminal 10 may determine an amount of power supplied from the grid 30 to the battery 50 and an amount of power supplied from the photovoltaic module 40 to the battery 50, according to the determined power consumption mode.

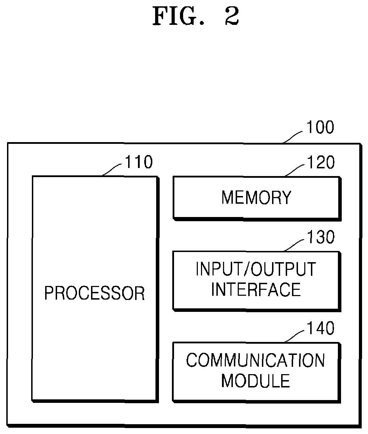

FIG. 2 is a block diagram of a user terminal according to an embodiment.

Referring to FIG. 2, a user terminal 100 includes a processor 110, a memory 120, an input/output interface 130, and a communication module 140. For convenience of description, only components related to the present disclosure are illustrated in FIG. 2. Accordingly, in addition to the components shown in FIG. 2, other general-purpose components may be further included in the user terminal 100. In addition, it is obvious to those skilled in the art related to the present disclosure that the processor 110, the memory 120, the input/output interface 130, and the communication module 140 shown in FIG. 2 may be implemented as independent devices.

The processor 110 may process commands of a computer program by performing basic arithmetic, logic, and input/output operations. Here, the commands may be provided from the memory 120 or an external apparatus. In addition, the processor 110 may generally control operations of other components included in the user terminal 100.

For example, the processor 110 may determine any one mode from among a plurality of preset power modes as a power consumption mode on the basis of a consumption time of power. Conventionally, a supply path of power supplied to a load is constant regardless of the time of power consumption, and thus, efficient use of power is not easy according to effects such as a price of power supplied by a grid and weather information. However, the processor 110 enables efficient use of power by supplying power to the load through different paths at different consumption times of power.

In addition, the processor 110 may determine a supply path of power on the basis of the determined power consumption mode. For example, the processor 110 may determine a supply path of power supplied to the load and may determine a supply path of power supplied to a battery, according to the determined power consumption mode.

In addition, the processor 110 may determine an amount of power to be supplied to the load by at least one of a grid, a photovoltaic module, and a battery, on the basis of an amount of power demanded by the load. In addition, the processor 110 may determine an amount of power to be supplied to the battery by at least one of the photovoltaic module and the grid, on the basis of an amount of power demanded by the battery.

Also, the processor 110 may determine a supply path of power supplied to the load by time period and a supply path of power charged to the battery by analyzing a pattern for an amount of power demanded in the past by at least one load.

As an embodiment, the processor 110 may calculate a price of unit power supplied from the grid to the load by time period and an amount of power supplied from the grid to the load by time period by analyzing an amount of power demanded in the past by the load. In the case where an amount of power, which is supplied from the grid to the load during a time period when the price of unit power described above is higher than an average price of unit power, exceeds a certain threshold value, the processor 110 may control the grid so that power is supplied from the grid to the battery during a time period when the price of the unit power described above is lower than the average price of unit power. In addition, the processor 110 may control the battery so that power is supplied to the load from the battery rather than from the grid during a time period when the price of unit power described above is higher than the average price of unit power.

The processor 110 may control power supply from the photovoltaic module, the battery, and the grid, on the basis of the determined supply path of power.

The processor 110 may be implemented as an array of a plurality of logical gates, or may be implemented as a combination of a general-purpose microprocessor and a memory that stores a program executable by the microprocessor. For example, the processor 110 may include a general-purpose processor, a central processing unit (CPU), a microprocessor, a digital signal processor (DSP), a controller, a microcontroller, a state machine, and the like. In some environments, the processor 110 may also include an application-specific integrated circuit (ASIC), a programmable logic device (PLD), a field programmable gate array (FPGA), and the like. For example, the processor 110 may also refer to a combination of processing devices, such as a combination of a digital signal processor (DSP) and a microprocessor, a combination of a plurality of microprocessors, a combination of one or more microprocessors combined with a digital signal processor (DSP) core, or any other combination of such components.

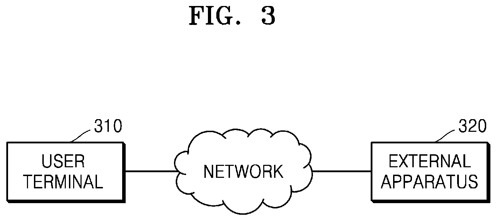

The memory 120 may include any non-transitory computer-readable recording medium. As an example, the memory 120 may include a permanent mass storage device such as random access memory (RAM), read only memory (ROM), a disk drive, a solid state drive (SSD), and a flash memory. As another example, the permanent mass storage device such as ROM, an SSD, a flash memory, and a disk drive may be a separate permanent storage device that is distinguished from a memory. In addition, the memory 120 may store an operating system (OS) and at least one program code (e.g., a code for the processor 110 to perform an operation to be described below with reference to FIGS. 3 to 7).

These software components may be loaded from a computer-readable recording medium that is separate from the memory 120. The separate computer-readable recording medium may be a recording medium that may be directly connected to the user terminal 100, and may include, for example, an input/output computer-readable recording medium such as a floppy drive, a disk, a tape, a DVD/CD-ROM drive, and a memory card. Alternatively, the software components may also be loaded into the memory 120 through the communication module 140 rather than from a computer-readable recording medium. For example, at least one program may be loaded into the memory 120 on the basis of a computer program (e.g., a computer program or the like for the processor 110 to perform an operation to be described below with reference to FIGS. 3 to 7), which is installed by files provided through the communication module 140 by developers or a file distribution system that distributes installation files of an application.

The input/output interface 130 may be a unit for interfacing with a device (e.g., a keyboard, a mouse, or the like) for an input and/or output, which may be connected to the user terminal 100 or included in the user terminal 100. The input/output interface 130 is illustrated in FIG. 2 as an element that is configured separately from the processor 110, but is not limited thereto, and the input/output interface 130 may be configured to be included in the processor 110. For example, the processor 110 may determine a mode input through the input/output interface 130 as a power consumption mode.

The communication module 140 may provide a component or function for the user terminal 100 to communicate with an external device (not shown) through a network. In addition, the communication module 140 may provide a component or function for the user terminal 100 to communicate with another external device. For example, a control signal, a command, data, and the like provided under control of the processor 110 may be transmitted to an external device through the communication module 140 and the network.

In addition, although not shown in FIG. 2, the user terminal 100 may include a display module. For example, the user terminal 100 may display, through the display module, an interface that displays a supply path of power.

FIG. 3 is an example diagram of a system including a user terminal and an external apparatus, according to an embodiment.

Referring to FIG. 3, a user terminal 310 may include all types of servers that manage webs and/or apps capable of providing artificial intelligence services. In addition, the user terminal 310 of FIG. 3 may be the same apparatus as the user terminal 10 of FIG. 1 and/or the user terminal 100 of FIG. 2.

An external apparatus 320 refers to a subject that provides information for the user terminal 310 to determine a power consumption mode and determine a supply path of power. The external apparatus 320 may include all types of servers that manage various types of information. The external apparatus 320 may include a database and may include a server that manages a web service application programming interface (API) capable of providing information, but is not limited thereto. For example, the external apparatus 320 may correspond to a server that transmits a price of unit power supplied from a grid by consumption time period of power. Also, the external apparatus 320 may correspond to a database that stores a power consumption pattern of a load.

The user terminal 310 and the external apparatus 320 may communicate with each other and/or other devices through a network. The network is a data communication network in a comprehensive sense, which enables different subjects to smoothly communicate with each other, and may include the wired Internet, the wireless Internet, and a mobile wireless communication network. For example, the network may include a local area network (LAN), a wide area network (WAN), a value added network (VAN), a mobile radio communication network, a satellite network, and a combination thereof. In addition, wireless communication may include, for example, a wireless LAN (Wi-Fi), Bluetooth, Bluetooth low energy, ZigBee, Wi-Fi Direct (WFD), ultrawideband (UWB), infrared Data Association (IrDA), and near field communication (NFC), and the like, but is not limited thereto.

The user terminal 310 may communicate with the external apparatus 320 through the network. The user terminal 310 may receive data from the external apparatus 320 by performing communication through the network and may provide a response based on the received data.

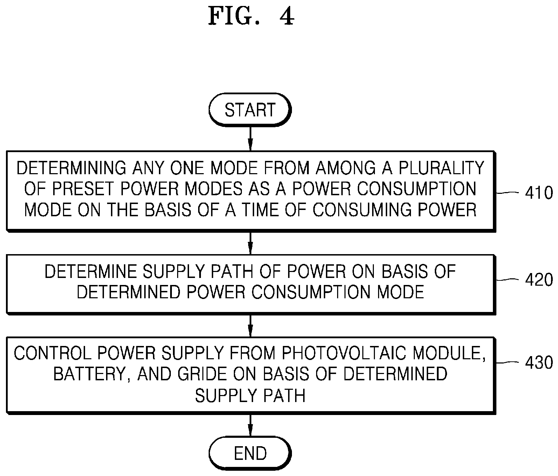

FIG. 4 is a flowchart illustrating a method of determining a power consumption mode on the basis of a consumption time of power, according to an embodiment.

Referring to FIG. 4, the method of determining a power consumption mode on the basis of a consumption time of power includes operations processed in a time series by the user terminal 100 and/or the processor 110 shown in FIG. 2. Therefore, even when the above description of the user terminal 100 or the processor 110 shown in FIG. 2 is omitted below, the above description may also be applied to the method of FIG. 4 of determining a power consumption mode on the basis of a consumption time of power.

In operation 410, the processor 110 may determine any one mode from among a plurality of preset power modes as a power consumption mode on the basis of a time of consuming power.

For example, the processor 110 may determine any one mode from among the plurality of preset power modes as the power consumption mode, on the basis of a price of unit power supplied from a grid at a time of consuming power.

Hereinafter, each mode is described in detail with reference to FIG. 5.

FIG. 5 is an example view illustrating an interface that displays a currently determined power consumption mode, according to an embodiment.

Referring to FIG. 5, a user terminal 500 may generate and display an interface that displays a power consumption mode 510.

In detail, the user terminal 500 may display a mode determined as the power consumption mode 510, from among a plurality of preset power modes. Also, the user terminal 500 may display a current time 580. Accordingly, a user may recognize in which mode power is being consumed at a current time.

When not determining the power consumption mode 510 on the basis of a current power consumption time, the user terminal 500 may display a non-operation 520.

In addition, when determining the power consumption mode 510 on the basis of the current power consumption time, the user terminal 500 may determine any one mode from among a first mode 530 to a fifth mode 570 as the power consumption mode 510. The user terminal 500 may display that power is being supplied in the determined power consumption mode 510. For example, the user terminal 500 may display a mode determined as the power consumption mode 510 in a different shape from the other modes to be distinguished.

Here, the first mode 530 refers to a mode for supplying a battery with excess power excluding an amount of power demanded by a load included in a power consumption place from among an amount of power produced by a photovoltaic module.

The second mode 540 refers to a mode for supplying power from the photovoltaic module to the battery without supplying power from a grid to the battery.

Here, the second mode 540 may store power in the battery by using only power generated from the photovoltaic module.

For example, to minimize power supplied from the grid during a time period when a price of unit power supplied from the grid is relatively high, the user terminal 500 may determine the second mode 540 as the power consumption mode 510 during a time period when the price of unit power supplied from the grid is higher than an average price.

The third mode 550 refers to a mode for supplying power from the grid and the photovoltaic module to the load without using power stored in the battery.

For example, in the case where a current amount of charge of the battery is less than the minimum amount of charge of the battery at the power consumption time, the user terminal 500 may determine the third mode 550 as the power consumption mode 510.

The fourth mode 560 refers to a mode for supplying the battery with power corresponding to an amount of power demanded by the user.

For example, in the case where the current amount of charge of the battery is less than the amount of power demanded by the user at the power consumption time, the user terminal 500 may determine the fourth mode 560 as the power consumption mode 510.

The fifth mode 570 refers to a mode for controlling an amount of power produced from the photovoltaic module so that power is not supplied from the photovoltaic module to the grid.

For example, when a penalty occurs in the case where power produced by the photovoltaic module is supplied to the grid, the user terminal 500 may determine the fifth mode 570 as the power consumption mode 510 on the basis of energy policy information of an area in which a solar photovoltaic system is located.

The user terminal 500 may determine the power consumption mode 510 on the basis of the power consumption time. For example, the user terminal 500 may determine the power consumption mode 510 on the basis of at least one of a price of unit power supplied from the grid to the load at the power consumption time and weather information at the power consumption time.

For example, in the case where the price of unit power supplied from the grid to the load at the power consumption time exceeds a certain threshold value, the user terminal 500 may determine, as the power consumption mode 510, the first mode 530 that maximizes the use of power generated through the solar photovoltaic system.

In addition, the user terminal 500 may determine the second mode 540 as the power consumption mode 510 so that power supplied from the grid is minimized during a time period when a unit price of power supplied from the grid is higher than an average price of power supplied from the grid.

Also, in the case where the minimum amount of charge of the battery is set at the power consumption time, the user terminal 500 may determine, as the power consumption mode 510, the third mode 550 for supplying power from the photovoltaic module to the load without using power stored in the battery.

In addition, in the case where an amount of power produced by the photovoltaic module exceeds the sum of an amount of power that may be currently charged to the battery and an amount of power demanded by the load, the user terminal 500 may determine the fifth mode 570 as the power consumption mode 510 so that power is not supplied from the photovoltaic module to the grid.

Referring back to FIG. 4, in operation 420, the processor 110 may determine a supply path of power on the basis of the determined power consumption mode.

For example, the supply path of power may include a first path for supplying power from a photovoltaic module to a battery, a second path for supplying power from the photovoltaic module to a load, a third path for supplying power from the battery to the load, a fourth path for supplying power from a grid to the load, a fifth path for supplying power from the grid to the battery, a sixth path for supplying power from the photovoltaic module to the grid, and a seventh path for supplying power from the battery to the grid, but is not limited thereto.

For example, in the case where a first mode is determined as a power consumption mode, the processor 110 may determine the first path, the second path, the fourth path, and the sixth path as a power supply mode. In addition, in the case where a second mode is determined as the power consumption mode, the processor 110 may determine the first path, the second path, and the fourth path as the power supply path. Also, in the case where a third mode is determined as the power consumption mode, the processor 110 may determine the second path and the fourth path as the power supply path. In addition, in the case where a fourth mode is determined as the power consumption mode, the processor 110 may determine the first path, the second path, the fourth path, and the fifth path as the power supply path. In addition, in the case where a fifth mode is determined as the power consumption mode, the processor 110 may determine the first path to the fifth path as the power supply path.

In addition, the processor 110 may determine an amount of power to be supplied to the supply path of power, on the basis of an amount of power demanded by at least one of the load and the battery.

In detail, in the case where an amount of power produced by the photovoltaic module exceeds an amount of power demanded by the load during execution of the first mode, the processor 110 may determine the amount of power demanded by the load as an amount of power to be supplied through the second path. In addition, the processor 110 may determine, as an amount of power to be supplied through the first path, an amount of power corresponding to a difference between the amount of power produced by the photovoltaic module and the amount of power demanded by the load.

Also, in the case where the amount of power produced by the photovoltaic module is less than or equal to the amount of power demanded by the load during the execution of the first mode, the processor 110 may determine the amount of power produced by the photovoltaic module as an amount of power to be supplied through the second path. In addition, the processor 110 may determine, as an amount of power to be supplied through the fourth path, the amount of power corresponding to the difference between the amount of power produced by the photovoltaic module and the amount of power demanded by the load.

In addition, in the case where, during the execution of the first mode, the amount of power produced by the photovoltaic module exceeds an amount of power that is the sum of the amount of power demanded by the load and an amount of power that may be charged to the battery, the processor 110 may determine, as an amount of power to be supplied through the sixth path, an amount of power corresponding to a difference between the amount of power produced by the photovoltaic module and the amount of power that is the sum of the amount of power demanded by the load and the amount of power that may be charged to the battery.

For example, in the case where the second mode is determined as the power consumption mode and thus power is supplied through the first path, the second path, and the fourth path, the processor 110 may determine, as an amount of power to be supplied through the first path, an amount of power corresponding to a difference between a minimum amount of charge of the battery and a current amount of charge of the battery. In addition, the processor 110 may determine, as an amount of power to be supplied through the second path, an amount of power corresponding to a difference between the amount of power produced by the photovoltaic module and the amount of power to be supplied through the first path. Also, the processor 110 may determine, as an amount of power to be supplied through the fourth path, an amount of power corresponding to a difference between the amount of power demanded by the load and the amount of power to be supplied through the second path.

For example, in the case where the third mode is determined as the power consumption mode and thus power is supplied through the second path and the fourth path, the processor 110 may control the photovoltaic module and the grid so that the sum of the amount of power supplied through the second path and the amount of power supplied through the fourth path corresponds to the amount of power demanded by the load. The processor 110 may determine the amount of power supplied through the second path and the amount of power supplied through the fourth path, on the basis of a power consumption pattern of the load.

For example, in the case where a time at which the third mode is determined as the power consumption mode is a nighttime at which solar power generation efficiency is low and more power is consumed in a nighttime than in a daytime as a result of analyzing a power consumption pattern of the load, the processor 110 may determine the amount of power supplied through the second path as 20 % of the amount of power demanded by the load and determine the amount of power supplied through the fourth path as 80 % of the amount of power demanded by the load.

In operation 430, the processor 110 may control power supply from the photovoltaic module, the battery, and the grid on the basis of the determined supply path.

In detail, the processor 110 may control, on the basis of the determined supply path of power, the photovoltaic module so that an amount of power that needs to be supplied from the photovoltaic module to at least one of the load and the battery is supplied to at least one of the load and the battery. In addition, the processor 110 may control the battery so that an amount of power that needs to be supplied from the battery to the load is supplied to the load. Also, the processor 110 may control the grid so that an amount of power that needs to be supplied from the grid to at least one of the load and the battery is supplied to at least one of the load and the battery.

In addition, in the case where the fifth mode is determined as the power consumption mode, the processor 110 may control the photovoltaic module so that the photovoltaic module no longer produces power to prevent power from being supplied through the sixth path, when the amount of power produced by the photovoltaic module exceeds the sum of an amount of power that may be currently charged to the battery and the amount of power demanded by the load.

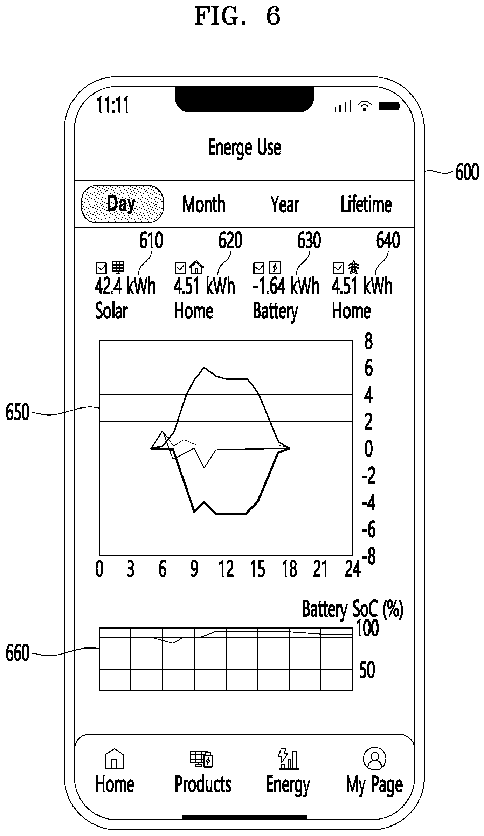

FIG. 6 is an example view illustrating an interface that displays amounts of power produced, supplied, and consumed by a solar photovoltaic system, according to an embodiment.

Referring to FIG. 6, a user terminal may generate an interface 600 that displays an amount of power produced, an amount of power supplied, and an amount of power consumed by a solar photovoltaic system. For example, the interface 600 may quantitatively display, by using a graph 650, an amount of power 610 produced by a photovoltaic module by time period, an amount of power 620 consumed by a load, an amount of power 630 stored in a battery or consumed by the battery, and an amount of power 640 supplied from a grid.

For example, the interface 600 may display the amounts 610, 620, 630, and 640 of power described above according to day/month/year.

In addition, the interface 600 may quantitatively display a current amount of charge (Battery SoC) of the battery. For example, the current amount of charge of the battery by time period may be quantitatively displayed by using a graph 660.

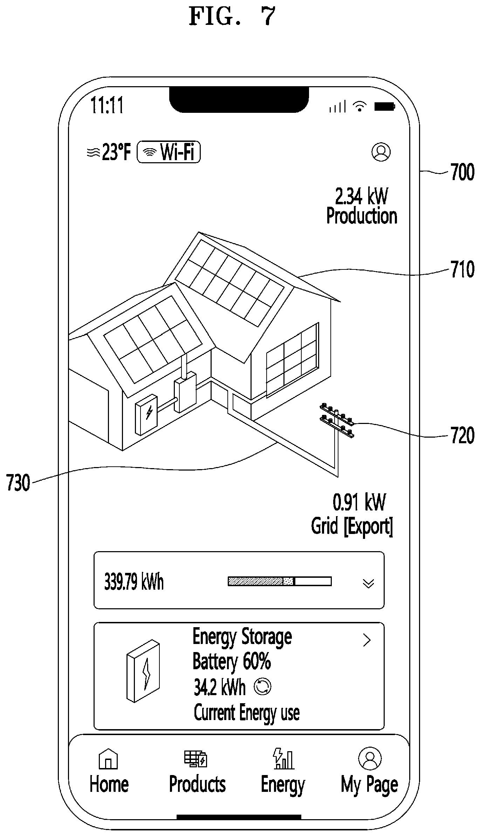

FIG. 7 is an example view illustrating an interface that displays a supply path of power, according to an embodiment.

Referring to FIG. 7, a user terminal may generate an interface 700 that displays a supply path of power.

In detail, the interface 700 may display a path through which power is currently supplied, on the basis of a first path for supplying power from a photovoltaic module to a battery, a second path for supplying power from the photovoltaic module to a load, a third path for supplying power from the battery to the load, a fourth path for supplying power from a grid to the load, a fifth path for supplying power from the grid to the battery, and a sixth path for supplying power from the photovoltaic module to the grid.

For example, in the case where power is supplied through a power supply path 730 from a grid 720 to a power consumption place 710 at which a load is located, the interface 700 may highlight and display the power supply path 730. In detail, in the case where power is not supplied through the power supply path 730, the interface 700 may display the power supply path 730 in a dark color. In addition, in the case where power is supplied through the power supply path 730, the interface 700 may display the power supply path 730 in a brighter color than in the case where power is not supplied through the power supply path 730.

Also, the interface 700 may display the power supply path 730 in a brighter color with an increase in an amount of power supplied through the power supply path 730.

Embodiments according to the present disclosure may be implemented in the form of a computer program that may be executed through various components on a computer, and the computer program may be recorded on a computer-readable medium. Here, the medium may include magnetic media, such as a hard disk, a floppy disk, and a magnetic tape, optical recording media, such as CD-ROM and DVD, a magneto-optical medium, such as a floptical disk, and hardware devices, such as ROM, RAM, and flash memory specially configured to store and execute program instructions.

Meanwhile, the computer program may be specially designed and configured for the present disclosure, or may be known to and used by those skilled in the art of the computer software field. Examples of the computer program may include not only machine language code generated by a compiler but also high-level language code that may be executed by a computer by using an interpreter or the like.

According to an embodiment, the method according to various embodiments of the present disclosure may be included and provided in computer program products. The computer program products may be traded between sellers and buyers as commodities. The computer program products may be distributed in the form of device-readable storage media (e.g., compact disc read only memory (CD-ROM)), or may be distributed (e.g., downloaded or uploaded) online via an application store (e.g., Play Store TM) or directly between two user devices. When distributed online, at least a portion of a computer program product may be temporarily stored or temporarily generated in a device-readable storage medium such as a server of a manufacturer, a server of an application store, or a memory of a relay server.

The operations constituting the method according to the present disclosure may be performed in any appropriate order unless an order of the operations is explicitly stated or stated to the contrary. The present disclosure is not necessarily limited according to the order of description of the operations. The use of all examples or example terms (e.g., and the like) in the present disclosure is simply to describe the present disclosure in detail, and the scope of the present disclosure is limited due to the examples or example terms unless limited by claims. In addition, those skilled in the art may appreciate that various modifications, combinations, and changes may be made according to design conditions and factors within the scope of appended claims or equivalents thereof.

Therefore, the spirit of the present disclosure should not be limited to the above-described embodiments, and not only claims described below, but also all scopes equivalent to the claims or equivalently changed therefrom will fall within the spirit of the present disclosure.

## Claims

1. A method of determining a power consumption mode on the basis of a time, the method comprising:
determining any one mode from among a plurality of preset power modes as a power consumption mode on the basis of a time of consuming power;
determining a supply path of power on the basis of the determined power consumption mode; and
controlling power supply from a photovoltaic module, a battery, and a grid on the basis of the determined supply path.

2. The method of claim 1, wherein the preset power modes comprises a plurality of modes from among a first mode for supplying the battery with excess power excluding an amount of power demanded by at least one load from among an amount of power produced by the photovoltaic module, a second mode for supplying power from the photovoltaic module to the battery without supplying power from the grid to the battery, a third mode for supplying the at least one load with power produced by the photovoltaic module and power supplied from the grid without using power stored in the battery, a fourth mode for supplying the battery with power equivalent to an amount of storage demanded by a user, and a fifth mode for preventing power from being supplied from the photovoltaic module to the grid.

3. The method of claim 1, wherein the determining the power consumption mode comprises determining the power consumption mode on the basis of at least one of a price of unit power supplied from the grid to at least one load at a power consumption time, an energy policy of an area in which a solar photovoltaic system is located, and weather information of the area in which the solar photovoltaic system is located.

4. The method of claim 1, wherein the determining the supply path of power comprises determining, as the supply path of power, at least one path from among a first path for supplying power from the photovoltaic module to the battery, a second path for supplying power from the photovoltaic module to at least one load, a third path for supplying power from the battery to the at least one load, a fourth path for supplying power from the grid to the at least one load, a fifth path for supplying power from the grid to the battery, a sixth path for supplying power from the photovoltaic module to the grid, and a seventh path for supplying power from the battery to the grid.

5. The method of claim 1, wherein the determining the supply path of power comprises determining the supply path of power on the basis of a pattern in which at least one load consumes power.

6. The method of claim 1, further comprising determining an amount of power to be supplied according to the determined supply path, on the basis of an amount of power demanded by at least one of at least one load and the battery.

7. The method of claim 1, further comprising generating an interface displaying the supply path.

8. The method of claim 7, wherein the generating the interface comprises displaying the supply path on the basis of an amount of power supplied through the supply path.

9. An apparatus comprising:
a memory storing at least one program; and
a processor configured to perform a calculation by executing the at least one program, wherein the processor is further configured to determine any one mode from among a plurality of preset power modes as a power consumption mode on the basis of a time of consuming power, determine a supply path of power on the basis of the determined power consumption mode, and control power supply from a photovoltaic module, a battery, and a grid on the basis of the predetermined supply path.

10. The apparatus of claim 9, wherein the preset power modes comprises a plurality of modes from among a first mode for supplying the battery with excess power excluding an amount of power demanded by at least one load from among an amount of power produced by the photovoltaic module, a second mode for supplying power from the photovoltaic module to the battery without supplying power from the grid to the battery, a third mode for supplying the at least one load with power produced by the photovoltaic module and power supplied from the grid without using power stored in the battery, a fourth mode for supplying the battery with power equivalent to an amount of storage demanded by a user, and a fifth mode for preventing power from being supplied from the photovoltaic module to the grid.

11. The apparatus of claim 9, wherein the determining the power consumption mode comprises determining the power consumption mode on the basis of at least one of a price of unit power supplied from the grid to at least one load at a power consumption time, an energy policy of an area in which a solar photovoltaic system is located, and weather information of the area in which the solar photovoltaic system is located.

12. The apparatus of claim 9, wherein the determining the supply path of power comprises determining, as the supply path of power, at least one path from among a first path for supplying power from the photovoltaic module to the battery, a second path for supplying power from the photovoltaic module to at least one load, a third path for supplying power from the battery to the at least one load, a fourth path for supplying power from the grid to the at least one load, a fifth path for supplying power from the grid to the battery, a sixth path for supplying power from the photovoltaic module to the grid, and a seventh path for supplying power from the battery to the grid.

13. The apparatus of claim 9, wherein the determining the supply path of power comprises determining the supply path of power on the basis of a pattern in which at least one load consumes power.

14. The apparatus of claim 9, wherein the processor is further configured to determine an amount of power to be supplied according to the determined supply path, on the basis of an amount of power demanded by at least one of at least one load and the battery.

15. The apparatus of claim 9, wherein the processor is further configured to generate an interface displaying the supply path.

16. The apparatus of claim 15, wherein the generating the interface comprises displaying the supply path on the basis of an amount of power supplied through the supply path.

17. A computer-readable recording medium having recorded thereon a program for causing the method of claim 1 to be executed.
